# EUROPEAN PATENT SPECIFICATION

(11) **EP 3 087 158 B1**
(45) Date of publication and mention of the grant of the patent: **24.07.2019**
(21) Application number: 14830746.5
(22) Date of filing: 27.11.2014
(51) Int. Cl.: C10C 3/02, C10C 3/04, E01C 19/10, B01F 5/10, C08L 95/00

(54) **A SYSTEM FOR PRODUCING MODIFIED BITUMEN**
SYSTEM ZUR HERSTELLUNG VON MODIFIZIERTEM BITUMEN
SYSTÈME DE PRODUCTION DE BITUME MODIFIÉ

(30) Priority: 24.12.2013 TR 201315189
(43) Date of publication of application: 02.11.2016
(73) Proprietor: Turkiye Petrol Rafinerileri Anonim Sirketi Tupras, 41780 Korfez/Kocaeli (TR)
(72) Inventor: CANIAZ, Ramazan Oguz, 41790 Kocaeli (TR); CIMEN, Refika, 41790 Korfez / Kocaeli (TR); GUMRUK, Esra, 34775 Umraniye / Istanbul (TR); GUNBAS, Ismail Dogan, 41790 Kocaeli (TR); YASAR, Muzaffer, 34320 Avcilar / Istanbul (TR); GURDAL, Savas, 34320 Avcilar / Istanbul (TR)
(74) Representative: Cayli, Hülya
(86) International application number: PCT/TR2014/000465
(87) International publication number: WO 2015/099625

(56) References cited:
- WO-A1-96/23580
- WO-A1-97/29168
- WO-A1-2011/080302
- SU-A1- 1 198 094

## Description

### Field of the Invention

The present invention relates to production systems for making modified bitumen (through addition of additives into bitumen and/or treatment with an oxygen-intensive gas).

### Prior Art

Bitumen, a petroleum product, is particularly used in making asphalt roads. Although bitumen is a durable material, some impairment (such as cracks, formation of tire tracks etc.) occurs over time on the roads with bitumen, due to environmental conditions. Therefore, in prior art, various additives are added into bitumen so as to increase its resistance. Various additives may be added into bitumen, such as fillers for increasing the strength, ionic liquids for imparting sulphur self-improvement property and viscosity reducers. However, when additives are added into bitumen in the production stage, various hazardous gases, particularly hydrogen sulphur (H₂S) may be generated. Therefore, it is necessary for the gases generated during the production of modified bitumen to be adsorbed by the additives mixed into bitumen, reacted, combusted or transferred into a Claus unit.

In addition, one of the challenges faced in the production of modified bitumen is to transform modified bitumen into a homogenous form. Since bitumen has a relatively viscous consistency, homogenous mixing of the said additives into bitumen is complicated. While bitumen is mixed with an additive, a sufficient amount of the additive cannot be mixed into bitumen, especially in those areas close to the walls of the production tank.

In the state-of-art patent document WO2011080302A1, there is disclosed a reactor for preparation of modified bitumen. The said reactor comprises a mixer for processing bitumen with oxygen or another additive. However, the mixer described in the said invention is not capable of providing a homogenous mixing of different additives with bitumen. Furthermore, in the system disclosed in WO2011080302A1, no mention is made to the controlled release or combustion of the hazardous gases resulting from the additives.

In WO2009152461A2 and WO2006009474A2, there are disclosed processes for preparation of modified bitumen by passing a gas through bitumen at a high temperature. However, the said processes do not mention an application for homogenous mixing of bitumen.

In SU1198094A1, there is a disclosed device for controlling the cooking process of bitumen from tar.

In WO9729168A1, there is a disclosed process for reducing sulfur emissions when the production of air-blowing asphalt is of concern.

US4339277A, US4155654A and US6843592A1 disclose methods for producing modified bitumen by mixing solid additives with bitumen. However, the said production methods do not disclose any application for rendering modified bitumen homogenous, and also no mention is made to such applications for controlled release or combustion of the hazardous gases resulting from production of modified bitumen.

### Brief Description of the Invention

With the present invention, there is disclosed a production system for obtaining modified bitumen by mixing bitumen with at least one additive and/or an oxygen-intensive gas. The said production system comprises a raw material source wherein bitumen is stored; an additive source wherein an additive is stored; at least one production tank into which the bitumen received from the raw material source and the additive received from the additive source are transferred; at least one mixer mixing the bitumen and the additive in the production tank with each other; at least one homogenizer receiving the bitumen-additive mixture in the production tank through the lower part of the production tank and supplying same back to the production tank through the upper part of the production tank via at least one return line so as to provide a homogenous mixture of the bitumen and the additive; at least one gas source supplying an inert gas into the production tank in order to remove undesired gases in the production tank and/or to supply an oxygen-intensive gas; at least one gas sensor analyzing the gases generated in the production tank so as to detect hazardous gases; at least one combustion unit connected to at least one combustible gas source and said production tank; at least one combustion valve controlling gas passage from the production tank to the combustion unit; at least one temperature regulation unit controlling the temperature of the production tank and at least one control unit configured to control operation of the production system, to control at least one combustion valve controlling gas passage from the said production tank to the said combustion unit and to activate the said combustion unit to start combusting the gases generated in the production tank via the combustible gas received from the combustible gas source if hazardous gas detected by said gas sensor exceeds 2 ppm.

The production system according to the present invention allows modified bitumen to be homogenous by means of the said homogenizer. Furthermore, hazardous gases generated in the production of modified bitumen are combusted in the said combustion unit. Thus, a reliable operation of the production system is provided.

### Object of the Invention

It is an object of the present invention to provide a production system for modified bitumen comprising additives.

Another object of the present invention is to provide a production system for producing homogenous modified bitumen.

Another object of the present invention is to provide a modified bitumen production system in which hazardous gases, especially hydrogen sulphur (H₂S), generated in the production process is controlled.

Yet another object of the present invention is to provide a modified bitumen production system using sulphur compounds occurring in high amounts in refinery applications.

Still another object of the present invention is to provide a modified bitumen production system which is reliable and practical.

### Description of the Drawings

The exemplary embodiments of the production system according to the present invention are illustrated in the enclosed drawings, in which:
Figure 1 is a block diagram of the production system.
Figure 2 is a perspective view of the production system.

All the parts illustrated in the figures are individually assigned a reference numeral and the corresponding terms of these numbers are listed as follows:

| | |
|---|---|
| Production system | (S) |
| Raw material source | (1) |
| Additive source | (2) |
| Production tank | (3) |
| Mixer | (4) |
| Homogenizer | (5) |
| Return line | (6) |
| Product tank | (7) |
| Gas source | (8) |
| Combustion unit | (9) |
| Combustible gas source | (10) |
| Solvent tank | (11) |
| Condensation unit | (12) |
| Temperature regulation unit | (13) |
| Weight sensing unit | (14) |
| Raw material valve | (15a) |
| Additive valve | (15b) |
| Return valve | (15c) |
| Outlet valve | (15d) |
| Gas valve | (15e) |
| Combustion valve | (15f) |
| Solvent valve | (15g) |
| Gas sensor | (16) |

### Description of the Invention

Bitumen is a substance particularly used in making asphalt roads and various insulation materials and produced in petroleum rafineries from the bottom of the vacumm distillation units. Particularly, in order to increase resistance of bitumen, various additives are added into bitumen so as to produce modified bitumen. With the present invention, a production method for producing modified bitumen is disclosed.

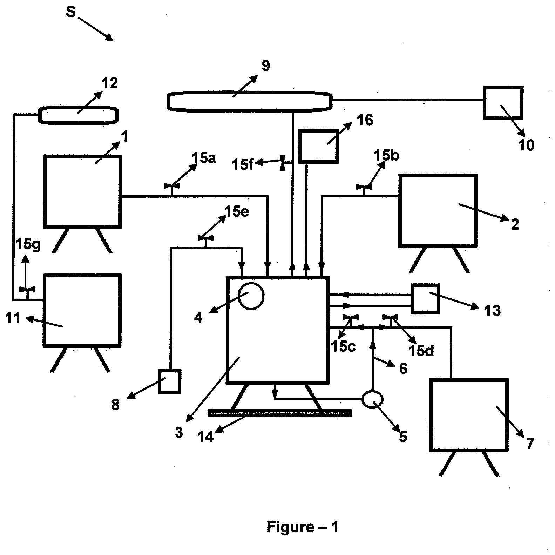

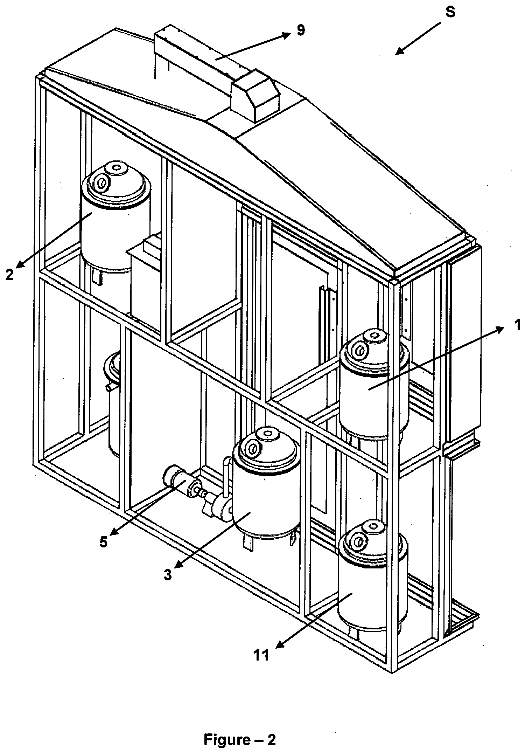

The production system (S) according to the present invention and as illustrated in Figures 1 and 2 comprises a raw material source (1) wherein bitumen is stored; an additive source (2) wherein an additive to be mixed into bitumen is stored; at least one production tank (3) into which the bitumen received from the raw material source (1) and the additive received from the additive source (2) are transferred; at least one mixer (4) mixing the bitumen and the additive in the production tank (3) with each other; at least one homogenizer (5) receiving the bitumen-additive mixture in the production tank (3) through the lower part of the production tank (3) and supplying same back to the production tank (3) via at least one return line (6) so as to provide a homogenous mixture of the bitumen and the additive; at least one gas source (8) supplying an inert gas (for example nitrogen) and/or oxygen-intensive gas into the production tank (3) in order to remove undesired gases in the production tank (3); at least one gas sensor (16) analyzing the gases generated in the production tank (3); at least one combustion unit (9) connected to at least one combustible gas source (10) and said production tank (3) and combusting the gases generated in the production tank (3) via the gas received from the combustible gas source (10); at least one temperature regulation unit (13) controlling the temperature of the production tank (3) and at least one control unit (i.e. a PLC - programmable logic controller) controlling operation of the production system (S). The said control unit determines the rate of the mixers, the duration of mixing, the temperature of mixing, after the mixing, the content of additive contained in the modified bitumen to be prepared, at which moment the valves will be opened, and activation of the combustion unit (9) (supplying a combustible gas into the unit (9), activation of the lighter, opening of the respective intermediate valves etc.) if the value read on H₂S sensor integrally mounted to the system exceeds a predetermined value. Furthermore, in cases of emergency, procedures for scavenging and discharging of the entire system with inert and combustible gases and parallel information are pre-inputted to this control unit as a scenario so that the system is controlled without manuel intervention. The said gas sensor preferably comprises at least one GC-SCD (gas chromatography sulfur chemiluminescence detector). Thus, hazardous gases, especially those comprising sulphur (i.e H₂S) are detected. Said hazardous gases are combusted in the combustion unit (9), if they are over 2 ppm, so as to convert them into non-hazardous materials.

In an illustrative embodiment of production system (S) according to the present invention, the bitumen received from the raw material source (1) and an additive (i.e. sulphur, ionic liquid, viscosity reducers, hydrogen sulphur absorbent etc.) received from the additive source (2) are transferred to the production tank (3). Then, an inert scavenging gas is supplied from the said gas source (8) to the production tank (3). The said scavenging gas is preferably an inert gas of working temperature such as nitrogen. With the inert scavenging gas, gases (i.e. gases such as oxygen that affects production of modified bitumen) inside the production tank (3) are removed from the production tank (3). Furthermore, oxygen-intensive gases are also passed through the said gas source (8) so that "blown" bitumen production processes can be designed, and gases to be generated during these processes can be analyzed in real time. Thereafter, the bitumen and the additive are mixed with the said mixer (4) in order to obtain modified bitumen. During the said mixing process, the temperature of the bitumen must be at least 135°C. Otherwise, the bitumen does not mix with the additive due to high viscosity. Therefore, the temperature of the production tank (3) is maintained at a desired temperature level ranging from 120 to 160°C by means of the said temperature regulation unit (13). While the bitumen and the additive are mixed with the said mixer (4), the mixture located at the lower part of the production tank (3) is circulated by the said homogenizer (5) and supplied back to the production tank (3) (through the upper part of the production tank (3)). The said homogenizer (5) is preferably in the form of a pump. Therefore, the mixture located at the lower part of the production tank (3) and the mixture located at the upper part thereof is mixed under continuous addition so that a homogenous mixture (modified bitumen) is obtained. When required, in obtaining the modified bitumen, gases generated in the production tank (3) are transferred into the said combustion unit (9) to be combusted. Thus, hazardous gases are converted into non-hazardous (or relatively low hazardous) gases so a reliable operation of the production system (S) is provided.

In a preferred embodiment of the invention, the production system (S) comprises at least one raw material valve (15a) for controlling the amount of the bitumen supplied from the raw material source (1) to the production tank (3). The production system (S) also comprises at least one additive valve (15b) for controlling the amount of the additive supplied from the additive source (2) to the production tank (3). With the said valves (15a, 15b), the ratio of the bitumen and the additive mixed in the production tank (3) can be controlled.

In another preferred embodiment of the invention, the production system (S) comprises at least one product tank (7) into which the modified bitumen produced in the production tank (3) is transferred. The said product tank (7) is preferably supplied via the return line (6). In this embodiment, the production system (S) comprises at least one return valve (15c) controlling the supply of the mixture in the return line (6) into the production tank (3) and at least one outlet valve (15d) controlling its supply into the product tank (7). Based on the operation of the return valve (15c) and the outlet valve (15d), the mixture (modified bitumen) supplied to the return line (6) by the homogenizer (5) is supplied to the production tank (3) and/or the product tank (7). Thus, with a single homogenizer (5), modified bitumen is rendered homogenous and supplied into the product tank (7).

In another preferred embodiment of the invention, the production system (S) comprises at least one gas valve (15e) controlling passage of a scavenging gas and/or oxygen-intensive gas from the gas source (8) to the production tank (3). With the said gas valve (15e), a scavenging gas is supplied only when the gas inside the production tank (3) is to be cleaned whereas an oxygen-intensive gas is supplied when "blown" bitumen production processes are to be carried out.

According to the invention, the production system (S) comprises at least one combustion valve (15f) controlling gas passage from the production tank (3) to the combustion unit (9). Supplying the gases generated in the production tank (3) into the combustion unit (9) and combusting same therein is controlled by the combustion valve (15f).

In an illustrative embodiment of the production system (S) according to the present invention, the said return line (6) includes at least one heating member (not shown). The modified bitumen passing through the said return line (6) is heated by the said heating member so that bitumen is prevented from freezing and obstructing the return line (6). Thus, the production system is rendered reliable and durable.

In another illustrative embodiment of the invention, the production system (S) comprises at least one weight sensor (14) measuring the weight of the production tank (3). Thus, the amounts of the materials contained in the production tank (3) can be controlled.

In another preferred embodiment of the invention, the production system (S) comprises at least one solvent tank (11) supplying a cleaning solvent into the production tank (3) for cleaning the production tank (3), the mixer (4) and the homogenizer (5) after the production process. Any residues in the production tank (3), the mixer (4) and the homogenizer (5) are cleaned with the solvent received from the solvent tank (11). Thus, any residues likely to remain in the lines are prevented from damaging the moving parts in a subsequent production process. In this embodiment, the production system (S) also comprises at least one condensation unit (12) condensing the solvent received from the solvent tank (11) before it is supplied to the production tank (3). By condensing the solvent in the said condensation unit (12), cleaning efficiency of the solvent is increased. The condensation unit (12) is preferably in the form of a cooling system (i.e. a liquid cooling system).

The production system (S) according to the present invention allows modified bitumen to be homogenous by means of the said homogenizer (5). Furthermore, hazardous gasses generated in the production of modified bitumen are combusted in the said combustion unit (9). Thus, a reliable operation of the production system (S) is provided.

## Claims

1. A production system (S) for producing modified bitumen by mixing bitumen with at least one additive, **characterized by** comprising;
- a raw material source (1) wherein bitumen is stored;
- an additive source (2) wherein an additive is stored;
- at least one production tank (3) into which the bitumen received from the raw material source (1) and the additive received from the additive source (2) are transferred;
- at least one mixer (4) mixing the bitumen and the additive in the production tank (3) with each other;
- at least one homogenizer (5) receiving the bitumen-additive mixture in the production tank (3) through the lower part of the production tank (3) and supplying same back to the production tank (3) through the upper part of the production tank (3) via at least one return line (6) so as to provide a homogenous mixture of the bitumen and the additive
- at least one gas source (8) supplying an inert gas into the production tank (3) in order to remove undesired gases in the production tank (3) and/or to supply an oxygen-intensive gas;
- at least one gas sensor (16) analyzing the gases generated in the production tank (3) so as to detect hazardous gases;
- at least one combustion unit (9) connected to at least one combustible gas source (10) and said production tank (3);
- at least one combustion valve (15f) controlling gas passage from the production tank (3) to the combustion unit (9);
- at least one temperature regulation unit (13) controlling the temperature of the production tank (3) and
- at least one control unit configured to control operation of the production system (S), to control said at least one combustion valve (15f) controlling gas passage from the said production tank (3) to the said combustion unit (9) and to activate the said combustion unit to start combusting the gases generated in the production tank (3) via the combustible gas received from the combustible gas source (10) if hazardous gas detected by said gas sensor (16) exceeds 2 ppm.

2. A production system (S) according to claim 1, **characterized in that** the gas sensor comprises at least one gas chromatography sulfur chemiluminescence detector.

3. A production system (S) according to claim 1, **characterized in that** the said control unit is in the form of a programmable logic controller.

4. A production system (S) according to claim 1, **characterized in that** the said homogenizer (5) is in the form of a pump.

5. A production system (S) according to claim 1, **characterized by** comprising at least one product tank (7) into which modified bitumen produced in the production tank (3) is transferred.

6. A production system (S) according to claim 5, **characterized by** comprising at least one return valve (15c) controlling the supply of the mixture in the return line (6) into the production tank (3) and at least one outlet valve (15d) controlling its supply into the product tank (7).

7. A production system (S) according to claim 1, **characterized by** comprising at least one gas valve (15e) controlling gas passage from the gas source (8) to the production tank (3).

8. A production system (S) according to claim 1, **characterized by** comprising at least one heating member located in the said return line (6).

9. A production system (S) according to claim 1, **characterized by** comprising at least one weight sensor (14) measuring the weight of the production tank (3).

10. A production system (S) according to claim 1, **characterized by** comprising at least one solvent tank (11) supplying a cleaning solvent into the production tank (3).

11. A production system (S) according to claim 10, **characterized by** comprising at least one condensation unit (12) condensing the solvent received from the solvent tank (11) before it is supplied to the production tank (3).

12. A production system (S) according to claim 11, **characterized in that** the condensation unit (12) is in the form of a cooling system.

## Patentansprüche

1. Produktionssystem (S) zum Produzieren von modifiziertem Bitumen durch Mischen von Bitumen mit wenigstens einem Additiv, **gekennzeichnet durch**
- eine Rohmaterialquelle (1), in der modifiziertes Bitumen gelagert ist,
- eine Additivquelle (2), in der ein Additiv gelagert ist,
- wenigstens einen Produktionstank (3), in den aus der Rohmaterialquelle (1) zugeführtes Bitumen und aus der Additivquelle (2) zugeführtes Additiv überführt werden,
- wenigstens einen Mischer (4), der das Bitumen und das Additiv in dem Produktionstank (3) miteinander vermischt,
- wenigstens einen Homogenisator (5), der das Bitumen-Additiv-Gemisch in dem Produktionstank (3) aus dem unteren Teil des Produktionstanks (3) aufnimmt und dieses über wenigstens eine Rückführleitung (6) in den oberen Teil des Produktionstanks (3) zurück in den Produktionstank (3) fördert, um so ein homogenes Gemisch aus Bitumen und Additiv bereitzustellen,
- wenigstens eine Gasquelle (8), die ein Edelgas in den Produktionstank (3) fördert, um unerwünschte Gase in dem Produktionstank (3) zu entfernen und/oder um sauerstoffreiches Gas zuzuführen,
- wenigstens einen Gassensor (16), der in dem Produktionstank (3) erzeugte Gase analysiert, um so gefährliche Gase zu detektieren,
- wenigstens eine Verbrennungseinheit (9), die mit wenigstens einer Quelle (10) für brennbares Gas und dem Produktionstank (3) verbunden ist,
- wenigstens ein Verbrennungsventil (15f), das den Gasdurchfluss aus dem Produktionstank (3) zu der Verbrennungseinheit (9) steuert,
- wenigstens eine Temperaturregeleinheit (13), die die Temperatur des Produktionstanks (3) steuert, und
- wenigstens eine Steuereinheit, die dazu eingerichtet ist, um den Betrieb des Produktionssystems (S) zu steuern, um das wenigstens eine Verbrennungsventil (15f), das den Gasdurchgang von dem Produktionstank (3) zu der Verbrennungseinheit (9) steuert, zu steuern und um die Verbrennungseinheit zu aktivieren, um die Verbrennung der in dem Produktionstank (3) erzeugten Gase mittels des aus der Quelle (10) für brennbares Gas zugeführten brennbaren Gases zu starten, wenn durch den Gassensor (16) detektiertes gefährliche Gas 2 ppm überschreitet.

2. Produktionssystem (S) nach Anspruch 1, **dadurch gekennzeichnet, dass** der Gassensor wenigstens einen Gaschromatography-Schwefel-Chemilumineszenz-Detektor aufweist.

3. Produktionssystem (S) nach Anspruch 1, **dadurch gekennzeichnet, dass** die Steuereinheit die Form einer speicherprogrammierbaren Steuerung hat.

4. Produktionssystem (S) nach Anspruch 1, **dadurch gekennzeichnet, dass** der Homogenisator (5) die Form einer Pumpe hat.

5. Produktionssystem (S) nach Anspruch 1, **gekennzeichnet durch** wenigstens einen Produkttank (7), in den modifiziertes Bitumen, das in dem Produktionstank (3) erzeugt worden ist, überführt wird.

6. Produktionssystem (S) nach Anspruch 5, **gekennzeichnet durch** wenigstens eine Rückführventil (15c), das die Zufuhr des Gemisches durch die Rückführleitung (6) in den Produktionstank (3) steuert, und wenigstens ein Auslassventil (15d), das die Zufuhr in den Produkttank (7) steuert.

7. Produktionssystem (S) nach Anspruch 1, **gekennzeichnet durch** wenigstens ein Gasventil (15e), das den Gasdurchfluss aus der Gasquelle (8) zu dem Produktionstank (3) steuert.

8. Produktionssystem (S) nach Anspruch 1, **gekennzeichnet durch** wenigstens ein Heizelement, das sich in der Rückführleitung (6) befindet.

9. Produktionssystem (S) nach Anspruch 1, **gekennzeichnet durch** wenigstens einen Gewichtssensor (14), der das Gewicht des Produktionstanks (3) misst.

10. Produktionssystem (S) nach Anspruch 1, **gekennzeichnet durch** wenigstens einen Lösungsmitteltank (11), der dem Produktionstank (3) ein Reinigungslösungsmittel zuführt.

11. Produktionssystem (S) nach Anspruch 10, **gekennzeichnet durch** wenigstens eine Kondensationseinheit (12), die das aus dem Lösungsmitteltank (11) zugeführte Lösungsmittel kondensiert, bevor es dem Produktionstank (3) zugeführt wird.

12. Produktionssystem (S) nach Anspruch 11, **dadurch gekennzeichnet, dass** die Kondensationseinheit (12) in der Form eines Kühlsystems vorliegt.

## Revendications

1. Système de production (S) pour produire un bitume modifié par le mélange d'un bitume avec au moins un additif, **caractérisé en ce qu'**il comprend ;
- une source de matière première (1) dans laquelle un bitume est stocké ;
- une source d'additif (2) dans laquelle un additif est stocké ;
- au moins une cuve de production (3) dans laquelle le bitume reçu à partir de la source de matière première (1) et l'additif reçu à partir de la source d'additif (2) sont transférés ;
- au moins un mélangeur (4) mélangeant le bitume et l'additif dans la cuve de production (3) l'un avec l'autre ;
- au moins un homogénéisateur (5) recevant le mélange bitume-additif dans la cuve de production (3) par la partie inférieure de la cuve de production (3) et le renvoyant dans la cuve de production (3) par la partie supérieure de la cuve de production (3) via au moins une conduite de retour (6) afin de fournir un mélange homogène du bitume et de l'additif
- au moins une source de gaz (8) fournissant un gaz inerte dans la cuve de production (3) afin d'éliminer les gaz indésirables dans la cuve de production (3) et/ou de fournir un gaz riche en oxygène ;
- au moins un capteur de gaz (16) analysant les gaz générés dans la cuve de production (3) afin de détecter des gaz dangereux ;
- au moins une unité de combustion (9) connectée à au moins une source de gaz combustible (10) et à ladite cuve de production (3) ;
- au moins une vanne de combustion (15f) commandant le passage d'un gaz depuis la cuve de production (3) vers l'unité de combustion (9) ;
- au moins une unité de régulation de température (13) commandant la température de la cuve de production (3) et
- au moins une unité de commande configurée pour commander le fonctionnement du système de production (S), pour commander ladite au moins une vanne de combustion (15f) commandant le passage d'un gaz depuis ladite cuve de production (3) vers ladite unité de combustion (9) et pour activer ladite unité de combustion pour commencer la combustion des gaz générés dans la cuve de production (3) via le gaz combustible reçu depuis la source de gaz combustible (10) si un gaz dangereux détecté par ledit capteur de gaz (16) dépasse 2 ppm.

2. Système de production (S) selon la revendication 1, **caractérisé en ce que** le capteur de gaz comprend au moins un détecteur de chimioluminescence de soufre de chromatographie en phase gazeuse.

3. Système de production (S) selon la revendication 1, **caractérisé en ce que** ladite unité de commande est sous la forme d'un automate programmable.

4. Système de production (S) selon la revendication 1, **caractérisé en ce que** ledit homogénéisateur (5) est sous la forme d'une pompe.

5. Système de production (S) selon la revendication 1, **caractérisé en ce qu'**il comprend au moins une cuve de produit (7) dans laquelle un bitume modifié produit dans la cuve de production (3) est transféré.

6. Système de production (S) selon la revendication 5, **caractérisé en ce qu'**il comprend au moins une vanne de retour (15c) commandant la fourniture du mélange dans la conduite de retour (6) dans la cuve de production (3) et au moins une vanne de sortie (15d) commandant sa fourniture dans la cuve de produit (7).

7. Système de production (S) selon la revendication 1, **caractérisé en ce qu'**il comprend au moins une vanne de gaz (15e) commandant le passage d'un gaz depuis la source de gaz (8) vers la cuve de production (3).

8. Système de production (S) selon la revendication 1, **caractérisé en ce qu'**il comprend au moins un élément chauffant situé dans ladite conduite de retour (6).

9. Système de production (S) selon la revendication 1, **caractérisé en ce qu'**il comprend au moins un capteur de poids (14) mesurant le poids de la cuve de production (3).

10. Système de production (S) selon la revendication 1, **caractérisé en ce qu'**il comprend au moins une cuve de solvant (11) fournissant un solvant de nettoyage dans la cuve de production (3).

11. Système de production (S) selon la revendication 10, **caractérisé en ce qu'**il comprend au moins une unité de condensation (12) condensant le solvant reçu à partir de la cuve de solvant (11) avant qu'il soit fourni à la cuve de production (3).

12. Système de production (S) selon la revendication 11, **caractérisé en ce que** l'unité de condensation (12) est sous la forme d'un système de refroidissement.
